# EUROPÄISCHE PATENTSCHRIFT

(11) **EP 2 621 787 B1**
(45) Veröffentlichungstag und Bekanntmachung des Hinweises auf die Patenterteilung: **25.11.2015**
(21) Anmeldenummer: 11757602.5
(22) Anmeldetag: 13.09.2011
(51) Int. Cl.: B62D 5/04, H02K 7/116

(54) **LENKGETRIEBE MIT ELEKTROMOTOR, STEUEREINHEIT UND SENSORIK SOWIE DAMIT AUSGESTATTETES ELEKTRISCHES HILFSKRAFTLENKSYSTEM**
STEERING GEAR WITH ELECTRIC MOTOR, CONTROL UNIT AND SENSOR SYSTEM AS WELL AS THEREWITH EQUIPED POWER STEERING SYSTEM
TRANSMISSION DE DIRECTION DE VOLANT AVEC MOTOR ÉLECTRIQUE, UNITÉ DE CONTRÔLE ET SYSTÈME CAPTEURS COMME LA DIRECTION ASSISTÉE ÉQUIPÉE AVEC

(30) Priorität: 30.09.2010 DE 102010041744
(43) Veröffentlichungstag der Anmeldung: 07.08.2013
(73) Patentinhaber: Robert Bosch Automotive Steering GmbH, 73527 Schwäbisch Gmünd (DE)
(72) Erfinder: BIEBER, Jürgen, 73655 Plüderhausen (DE); BUDAKER, Martin, 73540 Heubach (DE); KÜHNHÖFER, Thomas, 73540 Heubach (DE)
(86) Internationale Anmeldenummer: PCT/EP2011/065805
(87) Internationale Veröffentlichungsnummer: WO 2012/041693

(56) Entgegenhaltungen:
- DE-A1-102005 007 357
- DE-A1-102005 046 618
- DE-T2- 69 712 595

## Beschreibung

Die Erfindung betrifft ein Lenkgetriebe mit einem Elektromotor, einer Steuereinheit und Sensorik nach dem Oberbegriff des Anspruchs 1 sowie ein damit ausgestattetes elektrisches Hilfskraftlenksystem. Insbesondere betrifft die Erfindung ein Lenkgetriebe, das als Schraubradgetriebe bzw. Schneckengetriebe für ein elektrisches Hilfskraftlenksystem ausgebildet ist.

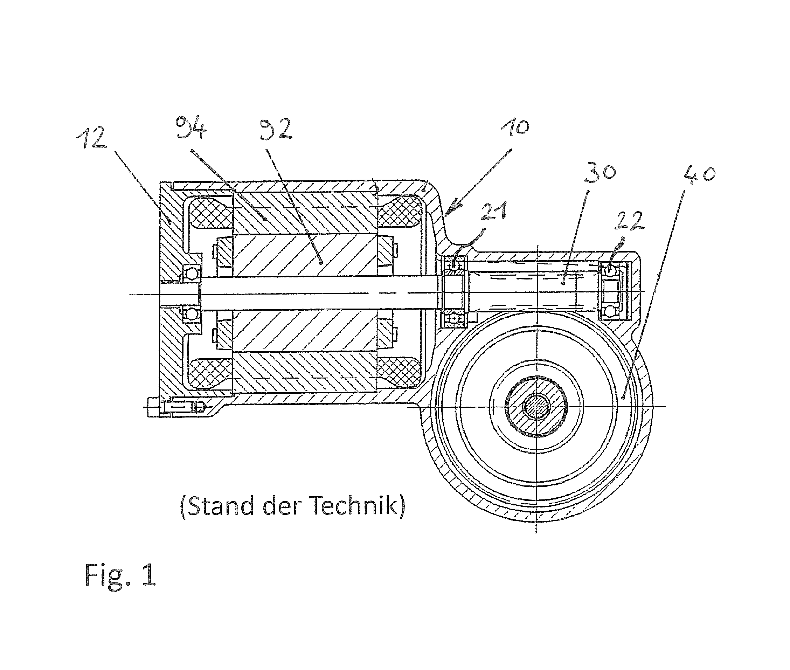

Aus der DE 19814719 A1 ist ein gattungsgemäßes Lenkgetriebe in Form eines Schraubradgetriebes für den Einsatz in einer elektrischen Hilfskraftlenkung bekannt. Die Fig.1 zeigt das bekannte Lenkgetriebe 10, das ein Gehäuse aufweist, in dem ein Schraubrad, nämlich das Schneckenrad 40, und ein darin eingreifendes Schraubritzel, nämlich die Schecke 30, angeordnet sind. Das Lenkgetriebe ist mit einem Elektromotor (Stator 94, Rotor 92) ausgestattet, der mit der Welle der Schnecke 30 verbunden ist, um diese anzutreiben. Wie dort kurz beschrieben wird (Spalte 2, Zeilen 48-49) erfolgt eine Regelung des Elektromotors in bekannter Weise durch Drehzahl- und Drehrichtungssensoren. Es ist daher davon auszugehen, dass zur Steuerung bzw. Regelung des dortigen Elektromotors auch eine Steuer- oder Regelungseinheit sowie eine Sensorik vorgesehen sind, die z.B. in oder am Gehäusedeckel 12 des Elektromotors angeordnet sein können.

DE102005007357 A1 offenbart eine Lenkgetriebe für ein Fahrzeug nach dem Oberbegriff des Anspruchs 1

Es ist üblich, die Steuerelektronik und insbesondere die Sensorik direkt oder zumindest sehr nahe an dem Elektromotor vorzusehen, um die Drehbewegung des Rotors genau zu erfassen. Denn zur Ansteuerung des Elektromotors muss der Drehwinkel, die Drehzahl bzw. -geschwindigkeit und/oder die Drehrichtung des Rotors möglichst exakt ermittelt und fortlaufend überwacht werden. Die übliche Anordnung einer Sensorik direkt oder zumindest sehr nahe am Elektromotor wird beispielsweise in den folgenden Druckschriften beschrieben wird: DE 10 2008 042 213 A1, DE 10 2008 040 318 A1 oder DE 100 37 485 A1, wobei die letztgenannte Druckschrift sich explizit auf ein Lenkgetriebe Form eines Schraubradgetriebes bezieht.

Als Sensoren werden üblicherweise Hall-Sensoren und/oder magnetoresistive Sensoren (MR-Senoren) verwendet, so wie dies beispielsweise in der DE 10 2007 011 672 A1 oder DE 102 21 340 A1 beschrieben wird.

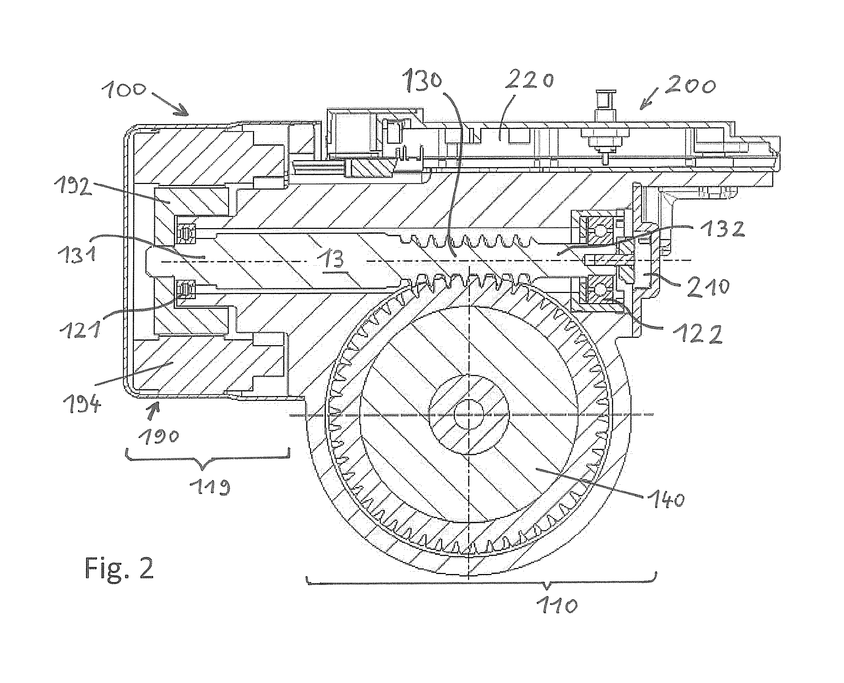

Was die Anordnung der Steuer- oder Regeleinheit angeht, so ist es üblich, diese ebenfalls direkt an dem Elektromotor oder zumindest sehr nahe davon anzuordnen. Hierzu wird beispielsweise auf die DE 10 2008 001 503 A1 (s. Fig. 1 oder Fig. 2) verwiesen, die eine Steuereinheit 9 aufweist, welche an dem Elektromotor 8 angeordnet ist. Diese Druckschrift bezieht sich zwar auf Lenkgetriebe für einen Lenksäulenantrieb, zeigt aber Anordnungen verschiedene Ausführungsformen mit Anordnungen der Steuereinheit (s. Fig. 6), die auch für andere Lenkgetriebe typisch sind. Demnach kann die Steuereinheit seitlich vom Elektromotor angeordnet sein (s. Fig. 1-4) oder axial versetzt an dem hinteren Ende des Elektromotors angeordnet sein (s. Fig 5-9). Da die Anordnung der Sensorik dort nicht explizit beschrieben wird, ist anzunehmen, dass die Sensorik in die Steuereinheit integriert ist.

Demnach sind grundsätzlich Lenkgetriebe bekannt, die ein Schraubritzel (z.B. mit eine Schnecke) aufweisen, die in dem Getriebegehäuse gelagert sind und von einem Elektromotor angetrieben werden, wobei auch eine Steuereinheit und eine damit verbundene Sensorik in oder an dem Lenkgetriebe angeordnet sind, um die Rotorlage und/oder Rotation des Rotors des Elektromotors zu detektieren und zu steuern.

Dabei hat die Anordnung der Steuereinheit und der Sensorik einen großen Einfluss auf die Gesamtgröße (Länge und/oder Breite) des Lenkgetriebes, was die Montage erschweren und das Bauvolumen erhöhen kann. Dies ist insbesondere im Zusammenhang mit Lenkgetrieben zu beachten, die als Schraubradgetriebe bzw. Schneckengetriebe ausgebildet ist. Denn die Schnecke ist üblicherweise an ihren beiden Wellenenden gelagert und wird über eines der Wellenenden mit der Rotorwelle des Elektromotors verbunden. Dadurch ergibt in axialer Richtung eine bereits sehr beachtliche und oftmals hinderliche Baulänge, die es in vielen Fällen den Einbau des Lenkgetriebes erschwert oder gar unmöglich macht.

Der Erfindung liegt daher die Aufgabe zu Grunde, ein Lenkgetriebe der eingangs genannten Art und die Schwenklagerung der Schraubritzel- bzw. Schneckenwelle deutlich zu verbessern. Dabei sollen die genannten Nachteile der herkömmlichen Lösungen in vorteilhafter Weise überwunden werden. Insbesondere sollen Bauteile eingespart und eine kompakte Konstruktion vorgeschlagen werden.

Gelöst wird die Aufgabe durch ein Lenkgetriebe mit den Merkmalen des Anspruchs 1.

Demnach wird ein Lenkgetriebe mit einem Schraubritzel (z.B. mit einer Schnecke) vorgeschlagen, das eine Welle aufweist, die in dem Getriebegehäuse gelagert und von einem Elektromotor antreibbar ist, wobei der antriebsseitige Abschnitt der Welle sich in axialer Richtung erstreckt und aus dem Getriebegehäuse herausragt, wobei das herausragende Ende des antriebsseitigen Abschnitts als eine Rotorwelle des Elektromotors ausgebildet ist, und wobei die Steuereinheit und/oder die Sensorik an dem Getriebegehäuse angeordnet sind. Insbesondere ist die Sensorik an dem nicht-antriebsseitigen Abschnitt der Welle des Schraubritzels angeordnet.

Damit wird ausgehend von einem typischen Getriebeaufbau, bei dem die Schraubritzel- bzw. Schneckenlagerung im Getriebegehäuse realisiert ist, das antriebsseitige Wellenende verlängert und zu einem Rotor ausgebildet, so dass der Elektromotor direkt an dem Getriebegehäuse angeordnet werden kann. Hierdurch wird bauteilesparend das Festlager der Schneckenlagerung auch für die Lagerung des Rotors genutzt, wobei der entsprechende Abschnitt Schneckenwelle deutlich kürzer als im Stand der Technik ausgeführt werden kann. Das wiederum ermöglicht es, insbesondere die Steuereinheit nicht an dem Motorgehäuse, sondern an dem kühleren Getriebegehäuse anzuordnen und somit wärmeerzeugende Leistungselektronik effektiver zu kühlen. Es ist also vorteilhaft, wenn wärmeerzeugende Leistungsbauteile der Steuerelektronik an dem Getriebegehäuse angeordnet sind, insbesondere an einer kühlenden Fläche des Getriebegehäuses angeordnet sind. Außerdem braucht auch die Sensorik nicht an der Motorwelle angeordnet zu werden, sondern kann an dem nicht-antriebsseitigen Abschnitt der Welle des Schraubritzels angeordnet werden, was eine hohe Flexibilität bezüglich der Konstruktionsmöglichkeiten bietet. Außerdem ergibt sich folgender Vorteil: Da die durchgehende Schneckenwelle auch gleichzeitig als Motorwelle dient, kann die so angeordnete Sensorik direkt und exakt die Rotorlage und/oder Rotorgeschwindigkeit der Motorwelle detektieren. Somit ist es möglich, ohne Einbußen für die Sensor-Messgenauigkeit, die Sensorik am freien Ende der Schneckenwelle anzuordnen und somit zu größeren konstruktiven Variationsmöglichkeiten zu kommen.

Zudem kann die im Getriebegehäuse realisierte Schwenklagerung der Schraubritzel- bzw. Schneckenwelle im Wesentlichen wie bei einer herkömmlichen Schraubradgetriebe dimensioniert werden kann. An dem anderen Ende der Welle, also an dem nicht-antriebsseitigen Ende der Schneckenwelle ist die Sensorik für die Überwachung der Rotorlage bzw. Rotorgeschwindigkeit angeordnet.

Vorzugsweise sind das Motorgehäuse und das Getriebegehäuse einstückig als ein einziges Gehäuse ausgebildet. Dabei kann der Rotor des Motors topfförmig ausgebildet werden, so dass er das Festlager umgreift. Insgesamt kann die Konstruktion sehr kompakt realisiert werden. Das Festlager kann auch aus dem Getriebegehäuse-Abschnitt heraus in den Motorgehäuse-Abschnitt verlegt werden. Dabei kann der Rotor des Motors topfförmig ausgebildet werden, so dass er das Festlager umgreift. Insgesamt kann die Konstruktion sehr kompakt realisiert werden.

Diese und weitere bevorzugte und vorteilhafte Ausgestaltungen ergeben sich aus den Unteransprüchen.

Demnach können die Steuereinheit und die Sensorik an verschiedenen Abschnitten des Getriebegehäuses angeordnet sein. Dabei sind beide vorzugsweise in einem Gehäuse (Steuerungsgehäuse) integriert, das beispielsweise ein L-förmiges oder T-förmiges Gehäuse sein kann.

Auch kann die Steuereinheit oder können zumindest Leistungsbauteile davon getrennt von der Sensorik an verschiedenen Abschnitten des Getriebegehäuses angeordnet sein. Dabei sind die Steuereinheit oder zumindest die Leistungsbauteile über Signalleitungen mit der Sensorik verbunden.

Erfindungsgemäß wird auch ein Elektrisches Hilfskraftlenksystem vorgeschlagen, das mit einem solchen Lenkgetriebe ausgestattet ist.

Im Folgenden wird die Erfindung eingehend beschrieben anhand von Ausführungsbeispielen und unter Bezugnahme auf die beiliegenden Zeichnungen, wobei:
- Fig. 1: einen herkömmlichen Lenkgetriebeaufbau darstellt;
- Fig. 2-4: Darstellungen zu erfindungsgemäßen Lenkgetriebe-Konstruktionen wiedergeben, wobei:

- Fig. 2: eine erste Anordnung der Sensorik darstellt,

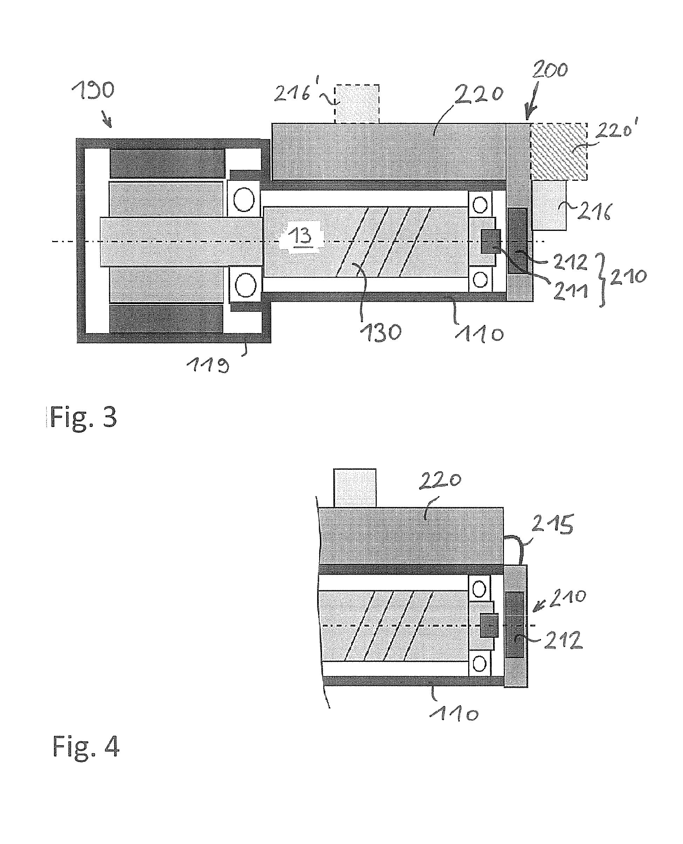

- Fig. 3: zwei Varianten dazu veranschaulicht, und
- Fig. 4: die Erfindung veranschaulicht.

Im Vergleich zu dem in der Fig. 1 dargestellten herkömmlichen Lenkgetriebeaufbau zeigt das in Fig. 2 dargestellte erfindungsgemäße Ausführungsbeispiel ein Lenkgetriebe 100 mit dem folgenden Aufbau:
In dem Getriebegehäuse 110 bzw. dem daran direkt anschließenden Motorgehäuse 119 ist ein als Schnecke ausgebildetes Schraubritzel 130 gelagert. Die Welle 13 der Schnecke 130 ist antriebsseitig in dem Motorgehäuse in einem Festlager 121 gelagert. Dazu wird der antriebsseitige Abschnitt 131 der Welle in einer entsprechenden ersten Wellenlagerung 121 aufgenommen, die als Schwenklager ausgebildet ist. Der antriebsseitige Abschnitt 131 ist als Rotorwelle ausgebildet, welche somit den Teil des Rotors 192 eines Elektromotors 190 bildet. Der Rotor 192 ist topfförmig gestaltet und umgreift das Wellenende 131. Mit anderen Worten: Das Festlager 121 befindet sich quasi im Zentrum des Motors 190, weil der Rotor 192 bzw. sein mindestens einer Permanentmagnet topfförmig ausgebildet sind, so dass das Festlager 121 umschlossen wird. Hierdurch wird eine noch stabilere Lagerung des Motors sowie kompakte Bauweise erreicht, so dass auch bei schweren oder baulangen Rotoren auf ein zusätzliches Stützlager gänzlich verzichtet werden kann.

An dem nicht-angetriebenen Ende der Welle 13 befindet sich ein Loslager 122, dessen Lagerbuchse eine radiale Elastizität aufweisen kann. Außerdem kann das Loslager bzw. die Wellenlagerung 122 mit einer axialen Anfederung versehen werden. Die Schnecke 130 steht mit einem Schneckenrad 140 in Eingriff, der durch die schwenkbare Lagerung auf der Festlagerseite optimiert wird.

Wie auch die Fig. 2 zeigt, erstreckt sich der antriebsseitige Abschnitt 131 aus dem Getriebegehäuse 110 heraus und dient an seinem Endbereich als (freie) Rotorwelle für den Elektromotor 190. Die Welle 13 ist also durchgehend und durchdringt sowohl das Getriebegehäuse 110 wie auch das Motorgehäuse 119. Das bedeutet, dass die durchgehende Welle 13 einstückig als Schneckenwelle und Rotorwelle ausgebildet ist. Das Festlager bzw. die erste Wellenlagerung 121 ist vorzugsweise als Schwenklager ausgebildet und dient sowohl zur eigentlichen Lagerung der Schneckenwelle wie auch zur Rotorlagerung. Diese hier vorgeschlagene Konstruktion kann sehr kompakt ausgeführt werden.

Im weiteren Unterschied zu üblichen Konstruktionen, befindet sich am Getriebegehäuse 110 auch die Steuereinheit 200 und die Sensorik 210. Die Sensorik 210 ist direkt an dem freien Wellenende, also an dem nicht-antriebsseitigen Abschnitts 132 der Welle 13 angeordnet und kann die Rotorlage und ggfs. auch die Rotorgeschwindigkeit exakt erfassen. In unmittelbarer Nähe dazu, nämlich direkt an dem Getriebegehäuse 110 bzw. dessen kühlenden Flächen befindet sich die Steuerelektronik 200 zur Ansteuerung des Elektromotors 190, der vorzugsweise als bürstenloser Gleichstrommotor ausgebildet ist. Dadurch können die Leitungen von der Sensorik 210 zur Steuerelektronik 200 kurz gehalten werden, was wiederum Kosten und Störanfälligkeit reduziert. Auch können die Zuleitungen zu den Ständerwicklungen 194 des Motors 190 kurz gehalten werden. Dadurch wird die elektrische Verlustleistung gering gehalten.

Wie in der Fig. 2 beispielhaft dargestellt ist, werden vorzugsweise wärme- bzw. hitzeerzeugende Teile der Steuerelektronik, nämlich die Leistungsbauteile 220 bzw. die Endstufenbauteile des Steuergerätes, direkt an dem Getriebegehäuse 110 angeordnet, um dort von der Fläche des Getriebegehäuses gekühlt zu werden. Die Fläche kann dazu als Kühlelement bzw. Kühlkörper mit Kühlrippen ausgebildet sein. Dadurch wird eine effektiv kühlende und platzsparende Anordnung von Steuergeräteteilen in modularer Bauweise vorgeschlagen.

Das Getriebegehäuse 110 und das Motorgehäuse 119 sind vorzugsweise als ein einstückiges Gehäuse realisiert, wobei jeder Gehäuseabschnitt 110 bzw. 119 für seine jeweilige Funktion optimiert ausgestaltet ist.

Die Gesamtkonstruktion der hier vorgeschlagenen Wellenlagerung stellt eine fliegende Lagerung der als Schnecke und Rotor einstückig ausgebildeten Welle dar und kann sehr kompakt sowie kostengünstig in einem elektrischen Hilfskraftlenksystem realisiert werden.

Wie die Fig. 2 zeigt, ist die Sensorik 210 zur Erfassung der Rotorlage an dem freien Wellenende der Schnecke 130 angeordnet. Die Sensorik 210 und das Steuergerät 200 bzw. die Leistungsbauteile 220 können auch in einem Gehäuse (Steuerungsgehäuse) integriert angeordnet sein.

Die Fig. 3 veranschaulicht dieses Prinzip anhand von folgenden zwei Varianten:
In einer ersten Variante (durchgezogene Linien) ist das Gehäuse der Steuerelektronik 200 L-förmig ausgebildet und umfasst die Leistungsbauteile 220 sowie die Sensorik 210 bzw. die eigentlichen Sensoren 212 (Hall- und/oder MR-Sensoren) mit ihrer entsprechenden Beschaltung. Zur Sensorik 210 gehören auch Gebermagnete 211, die an dem Wellenende angeordnet sind und somit mit der Welle 13 rotieren. Zur Stromversorung bzw. zum Batterie-Anschluss der Steuerelektronik 200 (Steuereinheit bzw. -gerät) sind an dem L-förmigen Gehäuse, hier im Bereich der Sensorik 210, passende Steckverbinder 216 vorgesehen.

In einer zweiten Variante (gestrichelte Linien) kann das Gehäuse der Steuerelektronik 200 auch T-förmig ausgebildet sein, wobei die Steckverbinder bzw. Stromanschlüsse 216' in Nähe der Leistungselektronik 220 angeordnet sind. Je nach Einbausituation kann die Konstruktion entsprechend der hier gezeigten Varianten oder weiterer ähnlicher Varianten an den vorhandenen Bauraum angepasst werden.

Die Fig. 4 veranschaulicht in Form einer Teilansicht der Erfindung bei der die Leistungselektronik 220 bzw. deren Bauteile und die Sensorik bzw. die eigentlichen Sensoren 212 in verschiedenen räumlich getrennten Gehäusen angeordnet sind. Dadurch kann die Anordnung noch besser an verschiedene Einbausituation angepasst werden. Insbesondere können die Sensoren noch flexibler auf die Gebermagneten hin ausgerichtet und justiert werden. Auch erfolgt keine Wärmeübertragung von der Leistungselektronik 220 zur Sensorik 210. Die Sensorik 210 ist über Leitungen, wie z.B. Flachbandkabel oder Flachbandleitung, mit der Steuerung bzw. Leistungsbauteilen 220 verbunden.

Auch wenn die Erfindung beispielhaft an einem Schneckengetriebe beschrieben worden ist, so ist die Erfindung nicht auf Schneckengetriebe beschränkt, sondern kann allgemein auf jede Art von Schraubradgetrieben angewendet werden. Das gezeigte Ausführungsbeispiel ist besonders für den Einsatz in einem elektrischen Hilfskraftlenksystem für Kraftfahrzeuge geeignet.

### Bezugszeichenliste

- 10: übliches Lenkgetriebe mit Schnecke 30 und Schneckenrad 40 sowie 21 Festlager, Loslager 22 für Schneckenwelle; außerdem mit Elektromotor mit 92 Rotor und 94 Stator sowie Gehäusedeckel 12

- 100: Lenkgetriebe (hier als Schneckengetriebe ausgebildet)
- 110: Getriebegehäuse bzw. Gehäuseabschnitt für Schneckenlagerung

- 121: erste Wellenlagerung (Festlager)
- 122: zweite Wellenlagerung (Loslager)

- 130: Schraubritzel (hier als Schnecke ausgebildet)
- 13: Schneckenwelle (Welle)
- 131: antriebsseitiger Abschnitt
- 132: freies Ende der Welle

- 140: Schraubrad (hier als Schneckenrad ausgebildet)

- 190: Elektromotor (hier als bürstenloser Gleichstrommotor ausgebildet)
- 19: Rotorwelle (entspricht dem verlängerten Abschnitt der Schneckenwelle 13)
- 192: Rotor bzw. Permanentmagnete (auf Rotorwelle)
- 194: Ständerwicklung des Motors
- 119: Motorgehäuse bzw. Gehäuseabschnitt für den Motor

- 200: Steuerelektronik (Steuereinheit bzw. -gerät)
- 220: Leistungsbauteile des Steuergerätes (zur Kühlung ausgelagert)

- 210: Sensorik zur Erfassung der Rotorlage (am freien Wellenende) mit: 211 Gebermagnet und 212 Sensoren (Hall- und/oder MR-Sensoren)
- 215: Verbindungsleitungen zwischen Sensorik und Leistungsbauteilen
- 216: Steckverbinder bzw. Anschluss zur Stromversorgung (Batterie)

## Patentansprüche

1. Lenkgetriebe (100) für ein Fahrzeug mit einem Elektromotor (190) und einer damit verbundenen Steuereinheit (200), wobei das Lenkgetriebe (100) ein Schraubrad (140) und ein darin eingreifendes Schraubritzel (130) aufweist, wobei das Schraubritzel (130) eine von dem Elektromotor (190) antreibbare Welle (13) aufweist, die in dem Getriebegehäuse (110) mittels einer ersten Wellenlagerung (121) und einer zweiten Wellenlagerung (122) gelagert ist, und wobei die Steuereinheit (200) und eine damit verbundene Sensorik (210) in dem Lenkgtriebe (100) angeordnet sind, um die Rotorlage und/oder Rotation des Rotors des Elektromotors (190) zu detektieren und zu steuern, wobei der antriebsseitige Abschnitt (131) der Welle (13) sich in axialer Richtung erstreckt und aus dem Getriebegehäuse (110) herausragt, wobei das herausragende Ende des antriebsseitigen Abschnitts (131) als eine Rotorwelle (19) des Elektromotors (190) ausgebildet ist und die Steuereinheit (200) und/oder die Sensorik (210) an dem Getriebegehäuse (110) angeordnet sind, **dadurch gekennzeichnet, dass** die Steuereinheit (200) und die Sensorik (210) an verschiedenen räumlich getrennten Gehäusen des Getriebegehäuses (110) angeordnet sind.

2. Lenkgetriebe (100) nach Anspruch 1, **dadurch gekennzeichnet, dass** die Sensorik (210) an dem nicht-antriebsseitigen Abschnitt (132) der Welle (13) des Schraubritzels (130) angeordnet ist.

3. Lenkgetriebe (100) nach Anspruch 1 oder 2, **dadurch gekennzeichnet, dass** die Steuereinheit (200) und die Sensorik (210) in einem Gehäuse, insbesondere L-förmigen oder T-förmigen Gehäuse, integriert angeordnet sind.

4. Lenkgetriebe (100) nach Anspruch 1 oder 2, **dadurch gekennzeichnet, dass** die Sensorik (210*) und die Steuereinheit (200) oder zumindest Leistungsbauteile (220) davon getrennt von der Sensorik (210) an verschiedenen Abschnitten des Getriebegehäuses (110) angeordnet sind.

5. Lenkgetriebe (100) nach Anspruch 4, **dadurch gekennzeichnet, dass** die Steuereinheit (200) oder zumindest die Leistungsbauteile (220) über Signalleitungen (216) mit der Sensorik (210) verbunden sind.

6. Lenkgetriebe (100) nach Anspruch 4 oder 5, **dadurch gekennzeichnet, dass** die Leistungsbauteile (220) der Steuerelektronik (200) an einer kühlenden Fläche des Getriebegehäuses (110) angeordnet sind.

7. Elektrisches Hilfskraftlenksystem umfassend ein Lenkgetriebe (100) mit einem Elektromotor (190) und einer damit verbundenen Steuereinheit (200), wobei das Lenkgetriebe (100) ein Schraubrad (140) und ein darin eingreifendes Schraubritzel (130) aufweist, wobei das Schraubritzel (130) eine von dem Elektromotor (190) antreibbare Welle (13) aufweist, die in dem Getriebegehäuse (110) mittels einer ersten Wellenlagerung (121) und einer zweiten Wellenlagerung (122) gelagert ist, und wobei die Steuereinheit (200) und eine damit verbundene Sensorik (210) in dem Lenkgtriebe (100) angeordnet sind, um die Rotorlage und/oder Rotation des Rotors des Elektromotors (190) zu detektieren und zu steuern, wobei der antriebsseitige Abschnitt (131) der Welle (13) sich in axialer Richtung erstreckt und aus dem Getriebegehäuse (110) herausragt, wobei das herausragende Ende des antriebsseitigen Abschnitts (131) als eine Rotorwelle (19) des Elektromotors (190) ausgebildet ist und die Steuereinheit (200) und/oder die Sensorik (210) an dem Getriebegehäuse (110) angeordnet sind, **dadurch gekennzeichnet, dass** die Steuereinheit (200) und die Sensorik (210) an verschiedenen Abschnitten des Getriebegehäuses (110) angeordnet sind.

8. Elektrisches Hilfskraftlenksystem nach Anspruch 7, **dadurch gekennzeichnet, dass** das Lenkgetriebe (100) nach einem der Ansprüche 2 bis 6 ausgebildet ist.

## Claims

1. Steering gear (100) for a vehicle having an electric motor (190) and a control unit (200) which is connected to the latter, the steering gear (100) having a spiral toothed wheel (140) and a helical pinion (130) which engages into the latter, the helical pinion (130) having a shaft (13) which can be driven by the electric motor (190) and is mounted in the gear housing (110) by means of a first shaft bearing (121) and a second shaft bearing (122), and the control unit (200) and a sensor system (210) which is connected to it being arranged in the steering gear (100), in order to detect and to control the rotor position and/or rotation of the rotor of the electric motor (190), the drive-side section (131) of the shaft (13) extending in the axial direction and protruding out of the gear housing (110), the protruding end of the drive-side section (131) being configured as a rotor shaft (19) of the electric motor (190), and the control unit (200) and/or the sensor system (210) being arranged on the gear housing (110), **characterized in that** the control unit (200) and the sensor system (210) are arranged on different spatially separated housings of the gear housing (110).

2. Steering gear (100) according to Claim 1, **characterized in that** the sensor system (210) is arranged on the non-drive-side section (132) of the shaft (13) of the helical pinion (130).

3. Steering gear (100) according to Claim 1 or 2, **characterized in that** the control unit (200) and the sensor system (210) are arranged in an integrated manner in a housing, in particular an L-shaped or T-shaped housing.

4. Steering gear (100) according to Claim 1 or 2, **characterized in that** the sensor system (210*) and the control unit (200) or at least power components (220) thereof separately from the sensor system (210) are arranged on different sections of the gear housing (110).

5. Steering gear (100) according to Claim 4, **characterized in that** the control unit (200) or at least the power components (220) is/are connected via signal lines (216) to the sensor system (210).

6. Steering gear (100) according to Claim 4 or 5, **characterized in that** the power components (220) of the control electronics (200) are arranged on a cooling surface of the gear housing (110).

7. Electrical power steering system comprising a steering gear (100) with an electric motor (190) and a control unit (200) which is connected to the latter, the steering gear (100) having a spiral toothed wheel (140) and a helical pinion (130) which engages into the latter, the helical pinion (130) having a shaft (13) which can be driven by the electric motor (190) and is mounted in the gear housing (110) by means of a first shaft bearing (121) and a second shaft bearing (122), and the control unit (200) and a sensor system (210) which is connected to it being arranged in the steering gear (100), in order to detect and to control the rotor position and/or rotation of the rotor of the electric motor (190), the drive-side section (131) of the shaft (13) extending in the axial direction and protruding out of the gear housing (110), the protruding end of the drive-side section (131) being configured as a rotor shaft (19) of the electric motor (190), and the control unit (200) and/or the sensor system (210) being arranged on the gear housing (110), **characterized in that** the control unit (200) and the sensor system (210) are arranged on different sections of the gear housing (110).

8. Electrical power steering system according to Claim 7, **characterized in that** the steering gear (100) is configured according to one of Claims 2 to 6.

## Revendications

1. Transmission de direction (100) pour un véhicule, comprenant un moteur électrique (190) et une unité de commande (200) connectée à celui-ci, la transmission de direction (100) présentant une roue hélicoïdale (140) et un pignon hélicoïdal (130) s'engageant dans celle-ci, le pignon hélicoïdal (130) présentant un arbre (13) pouvant être entraîné par le moteur électrique (190), qui est supporté dans le boîtier de transmission (110) au moyen d'un premier support sur palier d'arbre (121) et d'un deuxième support sur palier d'arbre (122), et l'unité de commande (200) et un système de capteur (210) connecté à celle-ci étant disposés dans la transmission de direction (100), afin de détecter et de commander la position du rotor et/ou la rotation du rotor du moteur électrique (190), la portion du côté de l'entraînement (131) de l'arbre (13) s'étendant dans la direction axiale et faisant saillie hors du boîtier de transmission (110), l'extrémité saillante de la portion du côté de l'entraînement (131) étant réalisée sous forme d'arbre de rotor (19) du moteur électrique (190) et l'unité de commande (200) et/ou le système de capteur (210) étant disposés au niveau du boîtier de transmission (110), **caractérisée en ce que** l'unité de commande (200) et le système de capteur (210) sont disposés sur des boîtiers différents, séparés spatialement, du boîtier de transmission (110).

2. Transmission de direction (100) selon la revendication 1, **caractérisée en ce que** le système de capteur (210) est disposé au niveau de la portion (132) de l'arbre (13) du pignon hélicoïdal (130) non située du côté de l'entraînement.

3. Transmission de direction (100) selon la revendication 1 ou 2, **caractérisée en ce que** l'unité de commande (200) et le système de capteur (210) sont disposés de façon intégrée dans un boîtier, en particulier un boîtier en forme de L ou en forme de T.

4. Transmission de direction (100) selon la revendication 1 ou 2, **caractérisée en ce que** le système de capteur (210*) et l'unité de commande (200) ou au moins des composants de puissance (220) de celle-ci sont disposés séparément du système de capteur (210) au niveau de différentes portions du boîtier de transmission (110).

5. Transmission de direction (100) selon la revendication 4, **caractérisée en ce que** l'unité de commande (200) ou au moins les composants de puissance (220) sont connectés au système de capteur (210) par le biais de conduites de signaux (216).

6. Transmission de direction (100) selon la revendication 4 ou 5, **caractérisée en ce que** les composants de puissance (220) de l'électronique de commande (200) sont disposés sur une surface de refroidissement du boîtier de transmission (110).

7. Système de direction assistée électrique comprenant une transmission de direction (100) comprenant un moteur électrique (190) et une unité de commande (200) connectée à celui-ci, la transmission de direction (100) présentant une roue hélicoïdale (140) et un pignon hélicoïdal (130) s'engageant dans celle-ci, le pignon hélicoïdal (130) présentant un arbre (13) pouvant être entraîné par le moteur électrique (190), qui est supporté dans le boîtier de transmission (110) au moyen d'un premier support sur palier d'arbre (121) et d'un deuxième support sur palier d'arbre (122), et l'unité de commande (200) et un système de capteur (210) connecté à celle-ci étant disposés dans la transmission de direction (100), afin de détecter et de commander la position du rotor et/ou la rotation du rotor du moteur électrique (190), la portion du côté de l'entraînement (131) de l'arbre (13) s'étendant dans la direction axiale et faisant saillie hors du boîtier de transmission (110), l'extrémité saillante de la portion du côté de l'entraînement (131) étant réalisée sous forme d'arbre de rotor (19) du moteur électrique (190) et l'unité de commande (200) et/ou le système de capteur (210) étant disposés au niveau du boîtier de transmission (110), **caractérisé en ce que** l'unité de commande (200) et le système de capteur (210) sont disposés sur des portions différentes du boîtier de transmission (110).

8. Système de direction assistée électrique selon la revendication 7, **caractérisé en ce que** la transmission de direction (100) est réalisée selon l'une quelconque des revendications 2 à 6.
